# EUROPÄISCHE PATENTSCHRIFT

(11) **EP 2 058 565 B1**
(45) Veröffentlichungstag und Bekanntmachung des Hinweises auf die Patenterteilung: **22.01.2014**
(21) Anmeldenummer: 08168357.5
(22) Anmeldetag: 05.11.2008
(51) Int. Cl.: F16J 15/34, F16J 15/44, F16C 11/06

(54) **Dynamisches Dichtelement**
Dynamic sealing element
Elément d'étanchéité dynamique

(30) Priorität: 08.11.2007 DE 102007053631
(43) Veröffentlichungstag der Anmeldung: 13.05.2009
(73) Patentinhaber: Schunk Kohlenstofftechnik GmbH, 35339 Giessen (DE)
(72) Erfinder: Hück, Werner, 35633, Lahnau (DE)
(74) Vertreter: Stoffregen, Hans-Herbert

(56) Entgegenhaltungen:
- EP-A- 0 443 067
- EP-A- 1 783 329
- DE-U1- 8 533 308
- GB-A- 1 164 213
- US-A- 2 836 439
- US-A- 3 477 748
- US-A- 3 895 814
- US-A- 4 344 629

## Beschreibung

Die Erfindung bezieht sich auf ein dynamisches Dichtelement bestimmt für die dynamische Dichtung bei Dreh-, Schwingungs-, Pendel-, und Taumelbewegungen, insbesondere bestimmt für eine Dampfkopfdichtung, mit einem eine Außenfläche aufweisenden Grundkörper, die nach dem Einlaufen des Dichtelements eine flächig an einer abzudichtenden Fläche anliegende Kontaktfläche ist. Ferner nimmt die Erfindung Bezug auf ein Verfahren zum Ausbilden einer von einem Grundkörper ausgehenden Kontaktfläche eines dynamischen Dichtelements bestimmt für die dynamische Dichtung bei Dreh-, Schwingungs-, Pendel-, und Taumelbewegungen, die nach dem Einlaufen flächig an einer abzudichtenden Fläche anliegt.

Aus der DE-C-482 546 ist eine Kupplung für eine Dampfleitung mit einem losen Dichtungsring zwischen den einander gegenüberliegenden Endflächen einer sich drehenden und einer feststehenden Kupplungshälfte bekannt. Der Dichtungsring ist mit einer senkrecht zur Drehachse liegenden Dichtungsfläche und einer gekrümmten Dichtungsfläche versehen und besteht zumindest teilweise aus Kohle oder gepresstem Graphit.

Gegenstand der DE-C-332 831 ist eine Dichtungsscheibe zur Abdichtung der Lager einer Kurbelwelle gegenüber einem Kurbelgehäuse. Die Dichtungsscheibe weist nach ihrer Grundfläche sich verbreiternde ringförmige Dichtungsleisten auf, die sich beim Einlaufen der Maschinen bis zu einer gewissen Grenze rasch abnutzen. Die Dichtungsleisten stellen sodann eine dichte Anlage an einer Gehäusewand sicher.

Ein Dichtelement für ein Lager nach der DE-A-1 750 294 umfasst zwei relativ zueinander drehbare, ringförmig zusammengepasste Teile, die gegeneinandergerichtete Berührungsdichtflächen aufweisen.

Der DE-A-197 09 369 ist eine Maschine zur Herstellung von Papier- oder Kartonbahnen zu entnehmen, bei der eine beheizbare Walze über ein Loslager abgestützt ist.

Aus der EP-A-1 783 329 ist eine mehrstufige Gleitringdichtung bekannt.

Eine selbstläppende Dichtung wird in der US-A-4,344,629 beschrieben. Die Dichtung besteht aus einem Metallring und einem diesen einkapselnden Gummiring.

Eine Drehgelenkdichtung ist aus der US-A-3,477,748 bekannt.

Eine Dichtung zum Verbinden zweier Rohre ist der GB-A-1,164,213 zu entnehmen.

Eine statische Dichtung aus weichem Graphit wird in der EP-A-0 433 067 beschrieben. Die Dichtung weist mehrere Vorsprünge auf, die zur Erhöhung der Dichtwirkung zusammenpressbar sind.

Eine Radialwellendichtung nach der US-A-3,895,814 weist einen aus Gummi bestehenden Körper mit im Schnitt dreieckförmigen Vorsprüngen auf, die zusammen mit fehlerhaften Bereichen der Dichtung verschlissen werden.

Der DE-U-85 33 308 ist eine Drehdichtung mit einem Innenteil mit Dichtungszähnen, die in einer Kegelwandfläche angeordnet sind, und einem das Innenteil aufnehmenden Außenteil zu entnehmen, das eine Bohrung aufweist, dessen Geometrie der der Kegelmantelfläche entspricht.

Um rotierende Systeme wie Walzen oder Trommeln gegenüber Druckleitungen, die z.B. Heiß- oder Kühlwasser oder Wärmeträgeröle führen, abzudichten, gelangen Dampf kopf- oder Speisekopfdichtungen zum Einsatz. Dabei muss die Konstruktion entsprechender Dichtungen derart ausgelegt sein, dass neben einer Drehbewegung auch Schwingungs-, Pendel- und Taumelbewegungen ermöglicht werden, die bei der Abdichtung entsprechender Systeme auftreten können. Hierzu werden überwiegend Kohlenstoffdichtungsringe mit einer konvexen oder konkaven Kontaktfläche eingesetzt. Dabei müssen diesbezügliche Dichtelemente zum Beispiel in der Papier- und Zellstoffindustrie wartungsfrei über lange Zeiträume ununterbrochen laufen.

Um die gewünschte Dichtwirkung zu erzielen, sind aufwendige Herstellungsschritte erforderlich, da ein flächiges Anliegen des Dichtelements an einer abzudichtenden Fläche gewährleistet sein muss, um ein Entweichen von Fluiden oder Gasen zu vermeiden. So werden üblicherweise die Dichtelemente nach einer spanenden Bearbeitung in eine Stahlform eingelegt und gedreht, um zu überprüfen, in welchem Umfang eine punktuelle oder eine flächige Berührung erfolgt. Wird ein punktueller Kontakt festgestellt, ist eine Nachbearbeitung erforderlich.

Der vorliegenden Erfindung liegt die Aufgabe zugrunde, ein Dichtelement, insbesondere bestimmt für eine Dampfkopfdichtung, der eingangs genannten Art so weiterzubilden, dass eine Vereinfachung der Herstellung gegeben ist, ohne dass Einbußen bei der Dichtwirkung in Kauf genommen werden müssen.

Erfindungsgemäß wird die Aufgabe im Wesentlichen dadurch gelöst, dass die Außenfläche des unbenutzten Dichtelements zumindest ein an der abzudichtenden Fläche sich abstützendes als Vorsprung ausgebildetes während des Einlaufens verschleißendes Einlaufelement als Einlaufhilfe aufweist, wobei nach vollständigem Verschleiß des Einlaufelements die Außenfläche die flächig anliegende Kontaktfläche ist, dass der über der Außenfläche des Grundkörpers vorstehende Vorsprung eine Höhe H mit 0,02 mm ≤ H ≤ 0,5 mm aufweist, dass der Vorsprung mit dem Grundkörper des unbenutzten Dichtelements integral ausgebildet ist und dass das Dichtelement aus zumindest einem Material aus der Gruppe Kohlenstoffgraphit, Graphit besteht.

Aufgrund der erfindungsgemäßen Lehre bedarf es nach der Herstellung des Dichtelementes keiner weiteren Bearbeitung zum Beispiel durch Läppen oder Polieren. Vielmehr wird aufgrund des zumindest einen eine Einlaufhilfe bildenden Vorsprungs eine höhere Dichtwirkung bei kürzerer Einlaufzeit erzielt. Der Vorsprung verschleißt schnell, so dass sodann ein flächiges Anliegen an der abzudichtenden Gegenlauffläche mit der Folge gegeben ist, dass die gewünschte Abdichtung herrscht.

Erfindungsgemäß wird gezielt in einem schnell verschleißendem Bereich der Dichtfläche eine Geometrieänderung vorgenommen, um beim Einsetzen des Dichtelementes zumindest eine linienförmige Abdichtung sicherzustellen, die nach kurzer Zeit in eine flächige übergeht, die wiederum die gewünschte Dichtwirkung bietet, ohne dass es nach der Herstellung des Dichtelementes selbst aufwendiger Nacharbeiten oder Einsetzen in eine Lehre und Überprüfen der Dichtfläche bedarf.

Ein Verfahren zum Ausbilden einer von einem Grundkörper ausgehenden Kontaktfläche eines dynamischen Dichtelements bestimmt für die dynamische Dichtung bei Dreh-, Schwingungs-, Pendel-, und Taumelbewegungen, die nach dem Einlaufen flächig an einer abzudichtenden Fläche anliegt, zeichnet sich dadurch aus, dass als das dynamische Dichtelement ein Dichtelement aus zumindest einem Material aus der Gruppe Kohlenstoffgraphit, Graphit verwendet wird, das im unbenutzten Zustand einen integral von dessen Außenfläche ausgehenden Vorsprung als Einlaufhilfe aufweist, das während des Einlaufens des Dichtelementes zum flächigen Anliegen der Kontaktfläche an der abzudichtenden Fläche nach einer Einlaufzeit t mit 1 sec ≤ t ≤ 10 min vollständig verschlissen wird.

Weitere Einzelheiten, Vorteile und Merkmale der Erfindung ergeben sich nicht nur aus den Ansprüchen, den diesen zu entnehmenden Merkmalen - für sich und/ oder in Kombination - sondern auch aus der nachfolgenden Beschreibung eines der Zeichnung zu entnehmenden Ausführungsbeispiels.

Es zeigen:
Fig. 1 einen Ausschnitt eines Gehäuses mit Dichtelement,
Fig. 2 einen Ausschnitt der Fig. 1 in vergrößerter Darstellung.

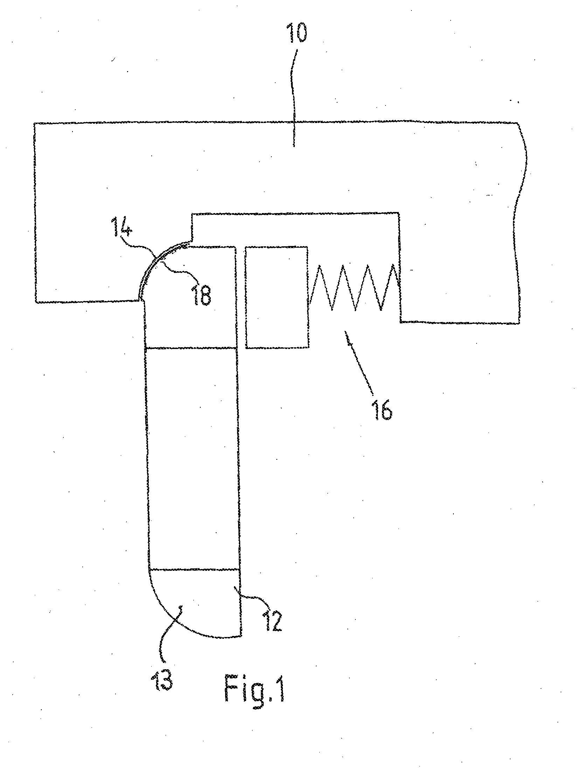

Der Fig. 1 ist ein Ausschnitt eines Gehäuses 10 zu entnehmen, in dem eine nicht dargestellte Welle zum Beispiel einer Walze oder einer Trommel gelagert und gegenüber dem Gehäuse 10 über ein dynamisches Dichtelement 12 abgedichtet ist. Insbesondere ist das Dichtelement für eine Dampfkopf- oder Speisekopfdichtung bestimmt, um eine Abdichtung gegenüber Heiß- oder Kühlwasser oder Wärmeträgerölen zu ermöglichen. Das Dichtelement 12 weist im Ausführungsbeispiel einen Grundkörper 13 in Form eines Ringkörpers auf, der in Richtung einer abzudichtenden Fläche 14 des Gehäuses 10 zum Beispiel mittels einer Federanordnung 16 kraftbeaufschlagt wird.

Bei der Zuführung von Dampf, Heiß- und Kühlwasser und Warmeträgerölen in umlaufende Walzen und Trommeln können neben der Drehbewegung auch Schwingungs-, Pendel- und Taumelbewegungen auftreten. Somit muss die Konstruktion der Dichtung 12 eine gewisse Winkelbewegung gestatten. Dies wird dadurch erreicht, dass die Dichtung 12 eine ballig ausgeformte Kontaktfläche 18 aufweist, die im Ausführungsbeispiel einen konvexen Verlauf zeigt. Hierdurch ist die Erfindung jedoch nicht eingeschränkt. Vielmehr kann auch eine konkave Kontaktfläche zum Einsatz gelangen. Aber auch für Kontaktflächen, die plan ausgebildet sind, also nicht einen konvexen oder konkaven Verlauf aufweisen, gilt die erfindungsgemäße Lehre.

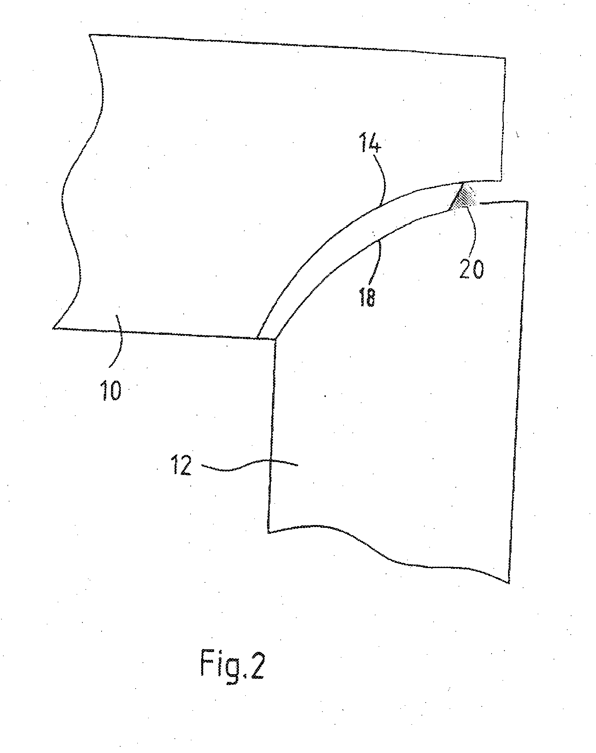

Damit die Herstellung des Dichtelements 12 vereinfacht wird, ohne dass Einbußen der Dichtwirkung in Kauf zu nehmen sind, ist erfindungsgemäß vorgesehen, dass von der Kontaktfläche 18 zumindest ein Vorsprung 20 ausgeht, der folglich über der Kontaktfläche 18 vorsteht. Dabei kann der Vorsprung 20 gemäß der Darstellung in Fig. 2 im Bereich größten Durchmessers des Dichtelements 12 vorgesehen sein. Der Vorsprung 20 kann im Schnitt eine Kreisabschnittgeometrie und eine Höhe zwischen 0,02 mm und 0,5 mm aufweisen, ohne dass die Zahlenwerte beschränkend aufzufassen sind. Auch in der Breite kann der Vorsprung 20 eine gleiche Dimensionierung zeigen. Breiten zwischen 0,02 mm und 1 mm sind jedoch bevorzugt anzugeben.

Bei einem für eine Dampfkopfdichtung bestimmten Dichtelement eines Außendurchmessers von 100 mm sollte die Höhe des Vorsprungs zwischen 0,02 mm und 0,1 mm liegen.

Durch das Vorhandensein des Vorsprungs 20 ist sichergestellt, dass beim Einsetzen des Dichtelements 12 unmittelbar eine Abdichtwirkung gegenüber der abzudichtenden Fläche 14 oder Gegenlauffläche gegeben ist. Gleichzeitig erfolgt ein schneller Verschleiß mit der Folge, dass bereits nach kurzer Einlaufzeit eine hohe Dichtwirkung gegeben ist. Die Einlaufzeit beträgt typischerweise einige Sekunden und ist materialabhängig. Insbesondere beläuft sich die die Einlaufzeit zwischen 1 Sekunde und 10 Minuten, vorzugsweise zwischen 1 Sekunde und 60 Sekunden.

Der nur bei dem ungenutzten Dichtelement 12 vorhandene Vorsprung 20 dient folglich als Einlaufhilfe, der bereits nach kurzer Nutzung abgetragen ist.

Durch den bereits zu Beginn des Einsatzes eine Dichtung bewirkenden Vorsprung 20 ist es nicht erforderlich, dass nach der Herstellung des Dichtrings 12 dieser zunächst in eine Lehre wie Stahlform eingelegt werden muss, um durch Drehen des Dichtrings festzustellen, ob die Kontaktfläche einen innerhalb vorgegebener Toleranzen liegenden Verlauf zeigt, dass also gegenüber der Stahlform eine flächige Berührung und keine linienförmige gegeben ist. Tritt letzteres auf, so sind Nacharbeiten zum Beispiel durch Läppen und Polieren erforderlich.

Das dynamische Dichtelement 12 besteht aus einem Material aus der Gruppe Kohlenstoffgraphit, Graphit. Der vor der Benutzung über der Kontaktfläche 18 des Dichtelements 12 vorstehende zumindest eine Vorsprung 20 besteht gleichfalls aus einem Material der zuvor genannten Gruppe.

## Patentansprüche

1. Dynamisches Dichtelement (12) bestimmt für die dynamische Dichtung bei Dreh-, Schwingungs-, Pendel- und Taumelbewegungen, insbesondere bestimmt für eine Dampfkopfdichtung, mit einem eine Außenfläche (18) aufweisenden Grundkörper, die nach dem Einlaufen des Dichtelements eine flächig an einer abzudichtenden Fläche (14) anliegende Kontaktfläche ist, wobei
die Außenfläche (18) des unbenutzten Dichtelements (12) zumindest ein an der abzudichtenden Fläche (14) sich abstützendes als Vorsprung (20) ausgebildetes während des Einlaufens verschleißendes Einlaufelement als Einlaufhilfe aufweist, wobei nach vollständigem Verschleiß des Einlaufelementes die Außenfläche die flächig anliegende Kontaktfläche ist, wobei der über der Außenfläche des Grundkörpers vorstehende Vorsprung eine Höhe H mit 0,02 mm ≤ H ≤ 0,5 mm aufweist, wobei der Vorsprung mit dem Grundkörper des unbenutzten Dichtelements integral ausgebildet ist und wobei das Dichtelement aus zumindest einem Material aus der Gruppe Kohlenstoffgraphit, Graphit besteht.

2. Dynamisches Dichtelement nach Anspruch 1,
**dadurch gekennzeichnet,**
**dass** von der Außenfläche (18) des Grundkörpers des Dichtelementes mehrere Vorsprünge (20) abragen.

3. Verfahren zum Ausbilden einer von einem Grundkörper ausgehenden Kontaktfläche eines dynamischen Dichtelements bestimmt für die dynamische Dichtung bei Dreh-, Schwingungs-, Pendel-, und Taumelbewegungen, die nach dem Einlaufen flächig an einer abzudichtenden Fläche anliegt, wobei
als das dynamische Dichtelement ein Dichtelement aus zumindest einem Material aus der Gruppe Kohlenstoffgraphit, Graphit verwendet wird, das im unbenutzten Zustand einen integral von dessen Außenfläche ausgehenden Vorsprung als Einlaufhilfe aufweist, das während des Einlaufens des Dichtelementes zum flächigen Anliegen der Kontaktfläche an der abzudichtenden Fläche nach einer Einlaufzeit t mit 1 sec ≤ t ≤ 10 min vollständig verschlissen wird.

## Claims

1. Dynamic sealing element (12), intended for the dynamic sealing during rotation, oscillation, vibration and tumbling motions, intended in particular for a steam head gasket, with a base body having an outer surface (18), which after the running in of the sealing element is a contact face being in planar contact with a surface (14) to be sealed,
wherein
the outer surface (18) of the unused sealing element (12) has at least one running-in element as a running-in aid wearing during the running-in and being formed as a protrusion (20) supporting on the surface to be sealed (14), wherein the outer surface is the contact face being in planar contact after complete wear of the running-in element, wherein the protrusion projecting beyond the outer surface of the base body exhibits a height H with 0.02 mm ≤ H ≤ 0.5 mm, wherein the protrusion is designed integrally with the base body of the unused sealing element, and wherein the sealing element consists of at least one material of the group carbon graphite, graphite.

2. Dynamic sealing element according to claim 1,
**characterized in**
**that** several protrusions (20) protrude from the outer surface (18) of the base body of the sealing element.

3. Method for forming a contact surface of a dynamic sealing element originating from a base body and intended for the dynamic sealing during rotation, oscillation, vibration and tumbling motions, which after the running-in is in planar contact with a surface to be sealed,
wherein
as the dynamic sealing element is used a sealing element made of at least one material of the group carbon graphite, graphite, which in the unused state has as running-in aid a protrusion originating integrally from its outer surface, which during the running-in of the sealing element is completely worn after a running-in time t with 1 sec ≤ t ≤ 10 min so that the contact surface is in planar contact with the surface to be sealed.

## Revendications

1. Élément d'étanchéité dynamique (12) destiné à l'étanchement dynamique en présence de mouvements rotatoires, vibratoires, pendulaires et nutatoires, en particulier pour un joint de tête de vaporisation, avec un corps de base présentant une face extérieure (18) qui, après le rodage de l'élément d'étanchéité, est une zone de contact s'appliquant surfaciquement contre une surface à étancher (14), sachant que la face extérieure (18) de l'élément d'étanchéité non utilisé (12) présente en tant qu'aide au rodage au moins un élément de rodage sous forme de proéminence (20) qui s'appuie sur la surface à étancher (14) et s'use pendant le rodage, qu'après l'usure intégrale de l'élément de rodage, la face extérieure est la zone de contact s'appuyant surfaciquement, que la proéminence faisant saillie sur la face extérieure du corps de base présente une hauteur H telle que 0,02 mm ≤ H ≤ 0,5 mm, que la proéminence est intégralement formée avec le corps de base de l'élément d'étanchéité non utilisé, et que l'élément d'étanchéité est constitué d'au moins un matériau du groupe carbone-graphite, graphite.

2. Élément d'étanchéité dynamique selon la revendication 1,
**caractérisé en ce**
**que** plusieurs proéminences (20) font saillie sur la face extérieure (18) du corps de base de l'élément d'étanchéité.

3. Procédé pour former une zone de contact partant d'un corps de base d'un élément d'étanchéité dynamique destiné à l'étanchement dynamique en présence de mouvements rotatoires, vibratoires, pendulaires et nutatoires, laquelle zone de contact s'applique surfaciquement contre une surface à étancher après le rodage, sachant qu'en tant qu'élément d'étanchéité dynamique est utilisé un élément d'étanchéité constitué d'au moins un matériau du groupe carbone-graphite, graphite, lequel à l'état non utilisé présente en tant qu'aide au rodage une proéminence partant intégralement de sa face extérieure, et qui pendant le rodage de l'élément d'étanchéité pour obtenir l'application surfacique de la zone de contact contre la surface à étancher, est entièrement usé après un temps de rodage t tel que 1 s ≤ t ≤ 10 min.
